# EUROPÄISCHE PATENTANMELDUNG

(11) **EP 1 767 472 A1**
(43) Veröffentlichungstag der Anmeldung: **28.03.2007**
(21) Anmeldenummer: 06121127.2
(22) Anmeldetag: 22.09.2006
(51) Int. Cl.: B65G 1/137

(54) **Verfahren zur Kommissionierung und Kommissionieranlage**

(30) Priorität: 26.09.2005 DE 102005045971
(71) Anmelder: Dematic GmbH & Co. KG, 63073 Offenbach (DE)
(72) Erfinder: Suess, Heiko, 60385 Frankfurt (DE)
(74) Vertreter: Moser & Götze

(57) **Zusammenfassung**

Die Erfindung bezieht sich auf ein Verfahren zur Kommissionierung von Artikeln in einer Kommissionieranlage (1). Die Artikel werden dabei in Artikelbehältern (2) an den Kommissionierplatz (4) herangeführt und von einem Kommissionierer auftragsspezifisch auf Kundenbehälter (3) verteilt. Zur Gewährleistung einer unterbrechungsfreien Kommissioniertätigkeit sieht die Erfindung vor, dass die Artikelbehälter (2) und die Kundenbehälter (3) dem Kommissionierplatz (4) zeitlich so gesteuert zugeführt und von diesem wieder abgeführt werden, dass zumindest während längerer Betriebsphasen fortlaufend mindestens ein zu befüllender Kundenbehälter (3) und mindestens ein Artikelbehälter (2), der zumindest einen für den dem mindestens einen Kundenbehälter (3) jeweils zugeordneten Auftrag noch benötigten Artikel enthält, am Kommissionierplatz (4) jeweils in Arbeitsposition bereitstehen.

## Beschreibung

Die Erfindung betrifft ein Verfahren zur Kommissionierung gemäß dem Gattungsbegriff des Patentanspruchs 1 und eine Kommissionieranlage gemäß dem Gattungsbegriff des Patentanspruchs 8.

Für die Lagerung von Artikeln kommen vielfach Hochregallager zum Einsatz, in denen die Artikel zur besseren Handhabbarkeit in Behältern gespeichert werden, die an einer der elektronischen Steuerung des Hochregallagers bekannten Lagerstelle abgestellt werden. Innerhalb eines Behälters sind die Artikel in der Regel gleichartig, besitzen also die gleiche Artikelnummer.

Soweit im folgenden von Behältern die Rede ist, soll dieser Begriff nicht einschränkend verstanden werden, sondern beliebige Lagerhilfsmittel umfassen, die zur lagertechnischen Handhabung einer Mehrzahl von Artikeln benutzt werden können, also insbesondere Behälter wie Lagerkästen, Kartons oder Kisten, aber auch Tablare, Paletten und ähnliches.

Die in einem Hochregallager gelagerten Waren müssen jeweils nach Art und Menge auftragsspezifisch zusammengestellt, d.h. kommissioniert werden. Hierzu können beispielsweise Kommissioniergeräte eingesetzt werden, auf denen ein Kommissionierer durch die Regalgassen eines Hochregallagers an den einzelnen Lagerstellen der Lagerbehälter vorbeifahren kann, um entsprechend dem jeweiligen Auftrag die benötigten Artikel in der gewünschten Stückzahl aus dem jeweiligen Artikelbehälter zu entnehmen und in einem dem jeweiligen Auftrag zugeordneten Kundenbehälter zu sammeln. Infolge der für das Anfahren der einzelnen Lagerpositionen im Hochregallager benötigten Zeit kommen bei dieser Kommissioniermethode erhebliche Wartezeiten für den Kommissionierer zu Stande.

Nach einem anderen Kommissionierverfahren werden diese Wartezeiten für den Kommissionierer drastisch reduziert. Dabei werden die von dem Kommissionierer für einen Auftrag benötigten Artikelbehälter über ein Fördersystem an einen Kommissionierplatz gebracht, wo der Kommissionierer während seiner gesamten Arbeitszeit bleibt und aus den einzelnen Artikelbehältern die für den jeweiligen Auftrag angeforderten Artikel in der richtigen Stückzahl entnimmt und auftragsspezifisch dem jeweiligen Kundenbehälter zuordnet. An das Fördersystem, welches die Verbindung zwischen dem Hochregallager und dem Kommissionierplatz herstellt, sowie an die Regalbediengeräte im Bereich des Hochregallagers werden hierbei hohe Anforderungen gestellt, um eine zügige Abwicklung am Kommissionierplatz zu gewährleisten.

Zur Steigerung der Leistungsfähigkeit der Regalbediengeräte ist es sinnvoll, bei den Fahrten durch die Lagergassen des Hochregallagers zu den jeweiligen Lagerstellen eine Wegoptimierung im Hinblick auf die Entnahme der Vielzahl von Artikelbehältern vorzunehmen, die für das jeweils am Kommissionierplatz anstehende Spektrum von Aufträgen benötigt werden. Das hat allerdings zur Folge, dass die Entnahme der Artikelbehälter aus dem Hochregallager in der Regel nicht in der Reihenfolge erfolgt, wie sie an sich für die Kommissioniertätigkeit notwendig wäre. Zur Lösung dieser Problematik ist es bekannt, zwischen dem Hochregallager und dem jeweiligen Kommissionierplatz ein Zwischenlager (Pufferspeicher) vorzusehen, in dem eine Vielzahl von Artikelbehältern zwischengespeichert werden kann und aus dem ein benötigter Artikelbehälter jeweils kurzfristig bei wahlfreiem Zugriff auf diesen Artikelbehälter ausgelagert und zum Kommissionierplatz befördert werden kann.

In diesem Zusammenhang ist aus der EP 0 860 382 B1 eine Kommissionieranlage bekannt, die eine Vielzahl von Kommissionierplätzen vorsieht, die aus einem großen Hochregallager mit einer Vielzahl von Regalzeilen bedient werden können. Zwischen dem Hochregallager und den parallel nebeneinander angeordneten Kommissionierplätzen ist ein Verteilsystem in Form einer endlos umlaufenden Förderanlage vorgesehen, an das die Kommissionierplätze jeweils über einen Zuförderer für neue Artikelbehälter und einen Abförderer für nicht mehr benötigte Artikelbehälter, die in das Hochregallager zurückgehen, angeschlossen sind. In den Zuförderer vom Verteilsystem zum Kommissionierplatz ist als Pufferspeicher ein Speicherturm eingeschaltet, der eine Vielzahl von übereinander angeordneten Speicherplätzen für Artikelbehälter aufweist, die mittels eines Vertikalförderers jeweils auf einen freien Speicherplatz gestellt und wahlfrei von diesem wieder entnommen werden können. Die für einen Auftrag benötigten Artikelbehälter können daher in beliebiger Reihenfolge aus dem Hochregallager zu diesem Speicherturm gebracht werden. Während der Kommissionierung eines Auftrags werden dann die benötigten Artikelbehälter in der richtigen Reihenfolge kurzfristig aus diesem Speicherturm entnommen und dem Kommissionierer in Arbeitsposition präsentiert, so dass er die benötigten Artikel in der richtigen Stückzahl für den jeweiligen Auftrag entnehmen kann. Anschließend wird dieser Artikelbehälter jeweils wieder abtransportiert in Richtung Hochregallager.

Je nach Art der Auftragszusammensetzungen kann es häufig vorkommen, dass gleiche Artikelbehälter für mehrere Aufträge, die an demselben Kommissionierplatz kommissioniert werden sollen, benötigt werden. Es liegt auf der Hand, dass es in einem solchen Fall ungünstig ist, nach Entnahme der benötigten Stückzahl für einen einzelnen Auftrag den Behälter wieder zurückzulagern in das Hochregallager, um ihn kurze Zeit später mit entsprechendem Aufwand für einen anderen Auftrag wieder an denselben Kommissionierplatz zurückzubringen.

Zur Lösung dieser Problematik wird in der EP 1 331 179 B1 eine Kommissionieranlage vorgeschlagen, bei der in unmittelbarer Nähe des Kommissionierplatzes ein Zwischenspeicher angeordnet ist, der in Form eines Regals mit zwei parallel nebeneinander angeordneten Regalzeilen ausgebildet ist, in denen jeweils eine Vielzahl von Abstellplätzen nebeneinander und übereinander vorgesehen ist. Dieser Zwischenspeicher ist in der Weise mit dem Kommissionierplatz verbunden, dass auf einer unteren Ebene der Zuförderer zum Kommissionierplatz durch die eine Regalzeile und der Abförderer durch die andere Regalzeile verläuft. Mit Hilfe einer Regalbedieneinheit können Artikelbehälter vom Zu- oder Abförderer aufgenommen und auf einen freien Lagerplatz gestellt werden und umgekehrt. Das auf dieser Kommissionieranlage betriebene Kommissionierverfahren sieht vor, dass Artikelbehälter mit Artikeln, die häufig benötigt werden, bei der Abarbeitung der Vielzahl von anschließenden Kommissionieraufträgen so lange immer wieder zwischen dem Kommissionierplatz und dem Zwischenspeicher hin- und hertransportiert werden, bis der letzte Artikel daraus entnommen ist. Wenn das der Fall ist, wird dieser leere Artikelbehälter für eine Wiederbefüllung abtransportiert und ein neuer mit dem Artikel befüllter Behälter in den Zwischenspeicher eingestellt. Der Kommissionierplatz dieser bekannten Kommissionieranlage ist so aufgebaut, dass der Artikelbehälter, aus dem der Kommissionierer jeweils einzelne Artikel für einen Auftrag entnehmen muss, an einer Umlenkstelle zwischen dem Zu- und dem Abförderer in Arbeitsstellung (Entnahmestellung) verharrt. Sobald die Artikelentnahme erfolgt ist, wird er weiterbefördert. Artikelbehälter, die selten benötigte Artikel enthalten, werden ohne eine Zwischenspeicherung im Zwischenspeicher nach der Entnahme der erforderlichen Stückzahl direkt wieder in das Hochregallager zurückbefördert. Der jeweils zu befüllende Auftragsbehälter ist außerhalb des Förderweges der Zu- und Abförderer seitlich versetzt zum Entnahmeplatz und in gleicher Höhe zu letzterem in Arbeitsstellung (Beladeposition) angeordnet.

Um Eilaufträge beschleunigt durchführen zu können, sieht das Kommissionierverfahren gemäß EP 1 331 179 B1 die Möglichkeit vor, einen laufenden Kommissionierauftrag zu unterbrechen und den jeweils zugehörigen, erst teilbefüllten Kundenbehälter zunächst über den Abförderer dem Zwischenspeicher zur Zwischenspeicherung zuzuführen, bis der Eilauftrag durchgeführt ist. Danach wird der Kundenbehälter in gleicher Weise wie ein Artikelbehälter über den Zuförderer an den Kommissionierplatz zurückgebracht und vom Kommissionierer in seine seitlich verlagerte Arbeitsposition verschoben, so dass anschließend dieser unterbrochene Auftrag fortgesetzt werden kann. Darüber hinaus ist es möglich, bei Kundenaufträgen, die mehrere Kundenbehälter zur Aufnahme der bestellten Artikel benötigen, die bereits gefüllten Kundenbehälter dieses Auftrags so lange im Zwischenspeicher zurückzuhalten, bis der letzte Kundenbehälter dieses Auftrags mit den jeweiligen Artikeln bestückt ist. Zur Erleichterung der Versandtätigkeit können dann sämtliche Kundenbehälter dieses Auftrags unmittelbar aufeinander folgend an den Versand gegeben werden, um beispielsweise auf einen LKW zum Abtransport verladen zu werden. Dadurch lassen sich Leerlaufzeiten im Versand wesentlich reduzieren.

Obwohl die Produktivität des Kommissionierplatzes gemäß EP 1 331 179 B1 durch die automatische Zuführung von Artikelbehältern in der jeweils benötigten Reihenfolge deutlich gesteigert werden kann, kommt es insbesondere beim Wechsel von Kundenbehältern noch zu deutlichen Leerzeiten. Diese machen sich umso stärker bemerkbar, je geringer die Anzahl der Artikelpositionen je Auftrag im Spektrum der an einem Kommissionierplatz abzuarbeitenden Aufträge ist, je häufiger also die Kundenbehälter zu wechseln sind.

Aufgabe der vorliegenden Erfindung ist es, die Kommissionierleistung am Kommissionierplatz weiter zu verbessern.

Gelöst wird diese Aufgabe ausgehend von einem Verfahren der gattungsgemäßen Art erfindungsgemäß durch die im kennzeichnenden Teil des Patentanspruchs 1 angegebenen Merkmale. Eine Kommissionieranlage zur Durchführung dieses Verfahrens ist im Patentanspruch 8 angegeben. Vorteilhafte Weiterbildungen des erfindungsgemäßen Kommissionierverfahrens und der Kommissionieranlage ergeben sich aus den jeweiligen Unteransprüchen, deren Merkmale in beliebiger Weise miteinander kombinierbar sind.

Das erfindungsgemäße Verfahren geht aus von einem Kommissionierverfahren in einer Kommissionieranlage mit fördertechnischen Anschlüssen an einen Versandbereich und an ein Artikellager, in dem unterschiedliche Artikel jeweils in Artikelbehältern gelagert sind. Dabei weist die Kommissionieranlage mindestens einen Kommissionierplatz auf, zu dem Artikelbehälter zwecks auftragsspezifischer Entnahme von Artikeln mittels erster Fördereinrichtungen hin- und wieder zurücktransportiert werden, wobei die Artikelbehälter dem Kommissionierplatz jeweils in einer zur Kommissionierung der Aufträge vorgegebenen Reihenfolge zugeführt werden. Im Nahbereich des Kommissionierplatzes ist mindestens ein Pufferspeicher für Kundenbehälter angeordnet, in denen die entnommenen Artikel auftragsspezifisch abgelegt werden, wobei der Pufferspeicher über zweite Fördereinrichtungen einerseits mit dem Versandbereich und andererseits mit dem Kommissionierplatz verbunden ist. Leere Kundenbehälter für neue Aufträge werden dem Kommissionierplatz jeweils mittels einer Zuführeinrichtung zugeführt, wohingegen fertig kommissionierte Kundenbehälter, die also bereits mit sämtlichen vorgesehenen Artikeln bestückt sind, über eine Abführeinrichtung abtransportiert werden. Zur Gewährleistung einer unterbrechungsfreien Kommissioniertätigkeit am jeweiligen Kommissionierplatz ist erfindungsgemäß vorgesehen, dass die Artikelbehälter und die Kundenbehälter dem Kommissionierplatz zeitlich so gesteuert zugeführt und von diesem wieder abgeführt werden, dass zumindest während längerer Betriebsphasen, insbesondere während der gesamten Betriebszeit, fortlaufend mindestens ein zu befüllender Behälter und mindestens ein Artikelbehälter, der zumindest einen für den dem mindestens einen Kundenbehälter jeweils zugeordneten Auftrag noch benötigten Artikel enthält, am Kommissionierplatz jeweils in Arbeitsposition bereitstehen. Unter der Arbeitsposition des Artikelbehälters ist dabei eine für den Kommissionierer geeignete Entnahmeposition für Artikel zu verstehen und unter Arbeitsposition eines Kundenbehälters eine für den Kommissionierer geeignete Beladeposition, in der die aus dem Artikelbehälter entnommenen Artikel in den Kundenbehälter gelegt werden können. Der Kommissionierer kann dabei eine menschliche Arbeitskraft, aber auch eine automatisierte Handhabungseinrichtung sein. Unter einer längeren Betriebsphase ist ein Zeitraum zu verstehen, der für die Kommissionierung einer Serie von Aufträgen benötigt wird, also der Zeitbedarf für wesentlich mehr als lediglich ein oder zwei Aufträge.

Vorzugsweise erfolgt die Zu- und Abführung der Artikel- und Kundenbehälter so, dass während des regulären Betriebs des Kommissionierplatzes, also abgesehen von planmäßigen Stillstandszeiten oder unvorhergesehenen Störfällen, mindestens zwei Artikelbehälter und mindestens zwei, insbesondere mindestens drei Kundenbehälter zur Kommissionierung am Kommissionierplatz in Arbeitsposition bereitstehen. Zweckmäßigerweise werden die Artikel in einer vorab bestimmten Sequenz aus dem Artikellager (z.B. Hochregallager) ausgelagert und dem Kommissionierplatz bzw. dem Pufferspeicher des Kommissionierplatzes zugeführt. Diese Sequenz richtet sich einerseits zwar selbstverständlich nach den Erfordernissen der gerade zur Abarbeitung am jeweiligen Kommissionierplatz anstehenden Serie von Aufträgen, kann andererseits aber durch die Anforderungen an einen möglichst effektiven Betrieb der Regalbediengeräte des Artikellagers bestimmt sein und stimmt daher in der Regel nicht mit der für die Kommissionierung benötigten Reihenfolge überein.

Besonders vorteilhaft ist es, während der Kommissionierung im Wesentlichen sämtliche Kundenbehälter für eine vorgegebene Serie von Aufträgen zeitlich parallel am Kommissionierplatz oder im Pufferspeicher zur Verfügung zu stellen und die Artikel eines Artikelbehälters - soweit dessen Stückzahl ausreicht - während eines ununterbrochenen Aufenthalts des Artikelbehälters am Kommissionierplatz jeweils auf alle diejenigen Kundenbehälter zu verteilen, die diesen Artikel benötigen. Während also ein Artikelbehälter jeweils zunächst am Kommissionierplatz verbleibt, werden die betroffenen Kundenbehälter jeweils zeitgerecht zwischen dem Pufferlager und dem Kommissionierplatz hin- und transportiert, bis sie auftragsabhängig mit sämtlichen vorgesehenen Artikeln bestückt sind. Wenn er nicht bereits vollständig entleert wird, wird der jeweilige Artikelbehälter nach Entnahme der benötigten Stückzahl des Artikels mit seinem Restbestand in das Artikellager zurückgelagert. Das erfindungsgemäße Arbeitsprinzip besteht also darin, einen aus dem Artikellager ausgelagerten Artikelbehälter so lange im Bereich des Kommissionierplatzes zu halten, bis der letzte einer Serie von Kommissionieraufträgen mit diesem Artikel versehen ist. Es findet hierbei also ein fortlaufender Wechsel der jeweils zu befüllenden Kundenbehälter statt, die bis zu ihrer endgültigen Befüllung mit dem letzten vorgesehenen Artikel immer wieder in den Zwischenspeicher zurückgeführt werden und aus diesem in der richtigen Reihenfolge bei der Befüllung mit dem nächsten Artikel wieder an den Kommissionierplatz zurückgebracht werden. Mit einer Serie von Aufträgen ist in diesem Zusammenhang eine Vielzahl von Aufträgen gemeint, die in einem vorgegebenen Zeitraum am Kommissionierplatz abgewickelt werden sollen. Dies ist in jedem Fall wesentlich mehr als lediglich zwei oder drei Aufträge, beispielsweise 10, 30, 50, 100 oder mehr Aufträge. Die Serie von Aufträgen kann beispielsweise sämtliche Aufträge umfassen, die ein Kommissionierer während einer Arbeitsschicht abzuarbeiten hat.

Vollständig entleerte Artikelbehälter werden entweder in das Artikellager oder in ein spezielles Leerbehälterlager zurückgeführt und stehen für eine erneute Befüllung mit Artikeln dort zur Verfügung.

Um die Zu- und Abführung von Artikelbehältern und Kundenbehältern möglichst unproblematisch vornehmen zu können, empfiehlt es sich, die Artikelbehälter in einer anderen Ebene zu transportieren und am Kommissionierplatz bereitzustellen als die Kundenbehälter. Zweckmäßig werden für den Transport der Artikel- und Kundenbehälter fest installierte Förderer eingesetzt. Um die Zwischenspeicherung der erst teilbestückten Kundenbehälter auf möglichst kleiner Grundfläche vornehmen zu können, empfiehlt es sich, die Zwischenspeicherung im Pufferspeicher auf unterschiedlichen Ebenen übereinander vorzusehen.

Eine erfindungsgemäße Kommissionieranlage verfügt über eine elektronische Steuerung und weist zumindest einen fördertechnischen Anschluss an ein Artikellager auf, in dem unterschiedliche Artikel in Artikelbehältern lagerbar sind. Weiterhin verfügt die Kommissionieranlage über mindestens einen Kommissionierplatz, zweckmäßigerweise über eine Vielzahl im Abstand nebeneinander angeordneter Kommissionierplätze, zu denen jeweils Artikelbehälter zwecks auftragsspezifischer Entnahme von Artikeln mittels erster Fördereinrichtungen hin und wieder zurück transportierbar sind. Weiterhin ist jeder Kommissionierplatz in seinem Nahbereich mit einem Pufferspeicher für Kundenbehälter versehen, wobei der Pufferspeicher über zweite Förderereinrichtungen mit dem jeweiligen Kommissionierplatz verbunden ist und einen wahlfreien Zugriff auf zumindest einen Teil (vorzugsweise alle) der in ihm zwischengespeicherten Kundenbehälter bei der Auslagerung erlaubt. Außerdem verfügt die Kommissionieranlage über eine Zuführeinrichtung für leere Kundenbehälter, in denen die zu einem Auftrag gehörigen Artikel aufnehmbar sind, zum Kommissionierplatz und eine Abführeinrichtung vom Kommissionierplatz für fertig kommissionierte Kundenbehälter. Zur Gewährleistung einer unterbrechungsfreien Kommissioniertätigkeit sieht die Erfindung vor, dass der jeweilige Kommissionierplatz über mindestens zwei Entnahmeplätze, an denen jeweils ein Artikelbehälter in Arbeitsposition bereitstellbar ist, und über mindestens zwei, insbesondere mindestens drei Beladeplätze verfügt, an denen Kundenbehälter in Arbeitsposition bereitstellbar sind. Dabei sind die Entnahmeplätze und die Beladeplätze zweckmäßigerweise jeweils unabhängig voneinander mit Artikelbehältern bzw. Kundenbehältern beladbar und entladbar.

Die elektronische Steuerung der Kommissionieranlage sollte vorteilhafter Weise so programmiert sein, dass die Artikelbehälter und die Kundenbehälter dem Kommissionierplatz zeitlich so gesteuert zuführbar und von diesem abführbar sind, dass zumindest während längerer Betriebsphasen fortlaufend an den Beladeplätzen mindestens ein noch zu befüllender Kundenbehälter und an den Entnahmeplätzen mindestens ein Artikelbehälter, der zumindest einen für den jeweiligen Auftrag des mindestens einen zu befüllenden Kundenbehälters noch benötigten Artikel enthält, bereitstehen.

Wenn mehrere Kommissionierplätze vorgesehen sind, empfiehlt es sich, diese über ein fördertechnisches Verteilsystem, insbesondere über einen kontinuierlich umlaufenden Förderer mit dem Artikellager zu verbinden. Entsprechende Lösungen sind beispielsweise aus der EP 0 860 382 B1 oder der EP 1 331 179 B1 bekannt, sodass insoweit auf diese Veröffentlichungen verwiesen werden kann.

Vorzugsweise ist der im Nahbereich eines Kommissionierplatzes jeweils aufgestellte Pufferspeicher als mindestens ein Speicherturm mit einem Vertikalförderer und mehreren übereinander angeordneten Speicherplätzen ausgebildet. Je nach Art und Umfang der an den Kommissionierplätzen abzuwickelnden Aufträge kann es zweckmäßig oder notwendig sein, den Pufferspeicher mit einem größeren Speichervolumen auszustatten. In solchen Fällen empfiehlt es sich, den Pufferspeicher aus mehreren Speichertürmen, beispielsweise zwei oder drei oder mehr, zu bilden. Diese Speichertürme sind dann selbstverständlich hinsichtlich der Zu- und Abförderung der Kundenbehälter an eine gemeinsame Förderanlage zum bzw. vom Kommissionierplatz angeschlossen. Selbstverständlich liegt es im Rahmen der vorliegenden Erfindung, den Pufferspeicher alternativ ausschließlich mit horizontal nebeneinander angeordneten Speicherplätzen auszubilden, insbesondere wenn die Speicherplätze Teil eines Förderers sind.

Die erforderliche Größe des Pufferlagers am jeweiligen Kommissionierplatz richtet sich nach der Größe der Auftragsserie, die in dem jeweils vorgesehenen Zeitraum an einem Kommissionierplatz abzuwickeln ist. Wenn es beispielsweise um die Versorgung der Filialen eines Einzelhandelsunternehmens mit Artikeln aus dessen Zentrallager geht, dann muss dieser Pufferspeicher mindestens je Filialbetrieb einen Kundenbehälter speichern können. Wenn je Filiale mehrere Kundenbehälter zur z. B. täglichen Belieferung benötigt werden, dann ist ein entsprechendes Mehrfaches dieser Anzahl an Pufferspeicherplätzen vorzusehen.

Durch die vorzugsweise vollständig automatisierte Zu- und Abführung von Artikelbehältern und Kundenbehältern zum Kommissionierplatz wird der Kommissionierer in die Lage versetzt, seine Tätigkeit nahezu vollständig auf die eigentliche Kommissionierung, also auf das Herausnehmen von Artikeln und das Hineinlegen dieser Artikel in einen Kundenbehälter zu konzentrieren. Die Leistungsfähigkeit der Kommissionieranlage ist dabei nur noch von der jeweiligen Leistungsfähigkeit der Kommissionierer an den Kommissionierplätzen abhängig. Leerzeiten können somit weitestgehend vermieden werden, sodass eine sehr schnelle Auftragsabwicklung gewährleistet werden kann.

Nachfolgend wird die Erfindung anhand der in den Figuren dargestellten Ausführungsbeispiele näher erläutert.
Es zeigen:
Figur 1, 3, 5 Varianten einer erfindungsgemäßen Kommissionieranlage jeweils im Grundriss,
Figur 2, 4, 6 die Kommissionieranlagen gemäß Figur 1, 3, 5 in perspektivischer Ansicht.

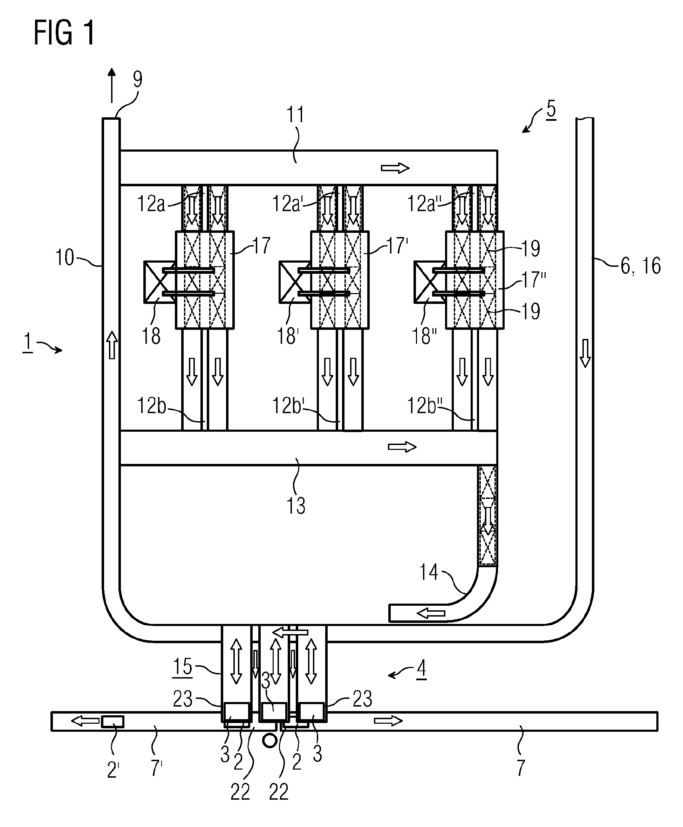

In den Figuren 1 bis 6, die unterschiedliche Varianten einer erfindungsgemäßen Kommissionieranlage jeweils im Grundriss bzw. in perspektivischer Ansicht zeigen, sind funktionsgleiche Anlagenteile jeweils mit demselben Bezugszeichen versehen worden. Es ist jeweils nur ein einzelner Kommissionierplatz mit seiner unmittelbaren Umgebung dargestellt worden, also weder das Artikellager noch der Versandbereich noch ein benachbarter Kommissionierplatz.

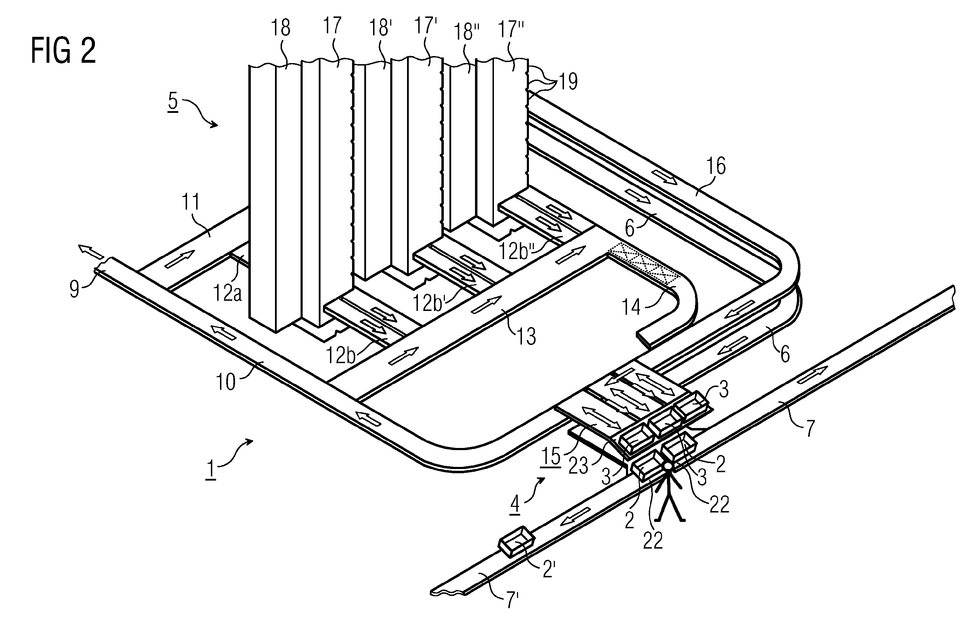

Die Kommissionieranlage 1 gemäß den Figuren 1 und 2 weist einen Kommissionierplatz 4 und einen Pufferspeicher 5 auf. In einer unteren Förderebene können mittels eines Förderers 6 Artikelbehälter 2 aus dem nicht dargestellten Artikellager zum Kommissionierplatz 4 befördert und dort in einer für den Kommissionierer geeigneten Arbeitsposition (Entnahmeplatz 22) bereitgestellt werden. Im vorliegenden Fall sind zwei Entnahmeplätze 22 vorgesehen. Der Pufferspeicher 5 ist modular aufgebaut und verfügt im dargestellten Ausführungsbeispiel über drei Speichertürme 17, 17', 17'', die jeweils mit einem Vertikalförderer 18, 18', 18'' mit geeigneter Handhabungsvorrichtung für Behälter versehen sind, um Kundenbehälter 3 in einen freien Speicherplatz aus der Vielzahl der verfügbaren Speicherplätze 19 einzustellen bzw. aus einem solchen zu entnehmen. Leere Kundenbehälter 3 können über eine als Förderer ausgebildete Zuführeinrichtung 16 und die weiteren Förderer 10 und 11 sowie 12a, 12a', 12a" beispielsweise aus einem nicht dargestellten Leerbehälterlager dem Pufferspeicher 5 zugeführt werden. Die zwischengespeicherten Kundenbehälter 3 können je nach Bedarf wahlfrei mittels der Vertikalförderer 18, 18', 18'' aus den jeweiligen Abstellplätzen des Pufferspeichers 5 entnommen und über die Förderer 12b, 12b', 12b'', 13, 14 dem Kommissionierplatz 4 zeitgereicht zugeführt werden. Über eine Ein- und Ausschleusvorrichtung 15 am Kommissionierplatz 4 können die Kundenbehälter 3 jeweils einem der drei unmittelbar nebeneinander angeordneten Beladeplätze 23 zugeführt werden. Die drei Beladeplätze 23 sind ebenso wie die beiden Entnahmeplätze 22 jeweils untereinander unabhängig be- und entladbar. Das bedeutet, dass ein Kundenbehälter 3 oder ein Artikelbehälter 2 am Kommissionierplatz 4 in seiner Arbeitsposition gegen einen anderen Behälter ausgetauscht werden kann, ohne dass die anderen in Arbeitsposition befindlichen Artikel- bzw. Kundenbehälter 2, 3 ihre Position verlassen müssen. Ein Artikelbehälter 2 bleibt solange am Kommissionierplatz 4, bis er entweder vollständig entleert ist oder aber bis der letzte Auftrag aus der Auftragsserie dieses Kommissionierplatzes 4 mit dem jeweiligen Artikel versorgt worden ist. Erst dann erfolgt der Abtransport des Artikelbehälters 2. Hierzu können leere Artikelbehälter 2' oder noch teilbefüllt gebliebene Artikelbehälter 2 über Förderer 7, 7' in das nicht dargestellte Artikellager zurückgebracht oder in ein Leerbehälterlager (ebenfalls nicht dargestellt) transportiert werden. Es sind zwei Förderer 7, 7' vorgesehen, damit der Abtransport eines Artikelbehälters 2 unabhängig vom weiteren Verbleib eines anderen Artikelbehälters 2 am Kommissionierplatz 4 erfolgen kann.

Wenn ein Kundenbehälter 3 entsprechend der Auftragsvorgabe fertig bestückt ist, kann er über die Ein- und Ausschleusvorrichtung 15 und den Förderer 10 sowie eine ebenfalls als Förderer ausgebildete Abführeinrichtung 9 an den nicht dargestellten Versandbereich gegeben werden. Insbesondere für den Fall, dass zu einem Kundenauftrag mehrere Kundenbehälter gehören, können diese zunächst im Pufferspeicher 5 zwischengespeichert werden, bis der letzte zu diesem Auftrag gehörende Kundenbehälter 3 gefüllt ist. Wenn das der Fall ist, können diese zwischengespeicherten Kundenbehälter 3 aus dem Pufferlager 5 über die Förderer 12b, 12b', 12b'', 14 und 10 zusammen mit dem letzten Kundenbehälter 3 auf die Abführeinrichtung 9 gegeben werden. Die Beladeplätze 23 sind in für den Kommissionierer gut erreichbarer Höhenposition über den Entnahmeplätzen 22 angeordnet. In entsprechender Weise ist auch die Förderebene der Förderer für den Transport der Kundenbehälter 3, also die Ebene der Förderer 10, 11, 12, 13, 14, 15, 16 entsprechend höher gelegt als die Förderebene für die Artikelbehälter 2. Dadurch wird gewährleistet, dass sich die Transportvorgänge für die Kundenbehälter und die Artikelbehälter nicht gegenseitig stören.

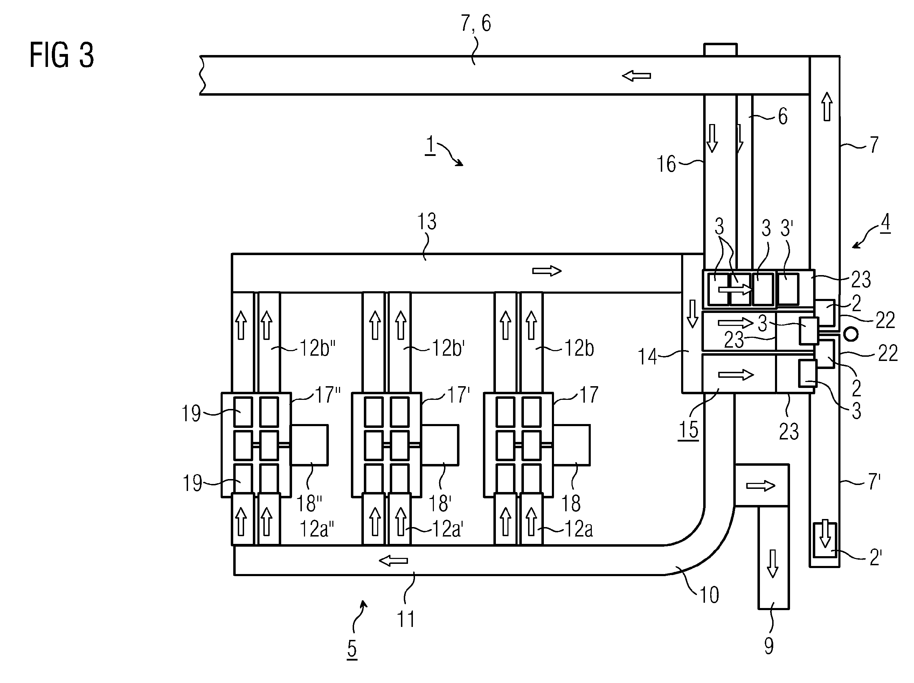

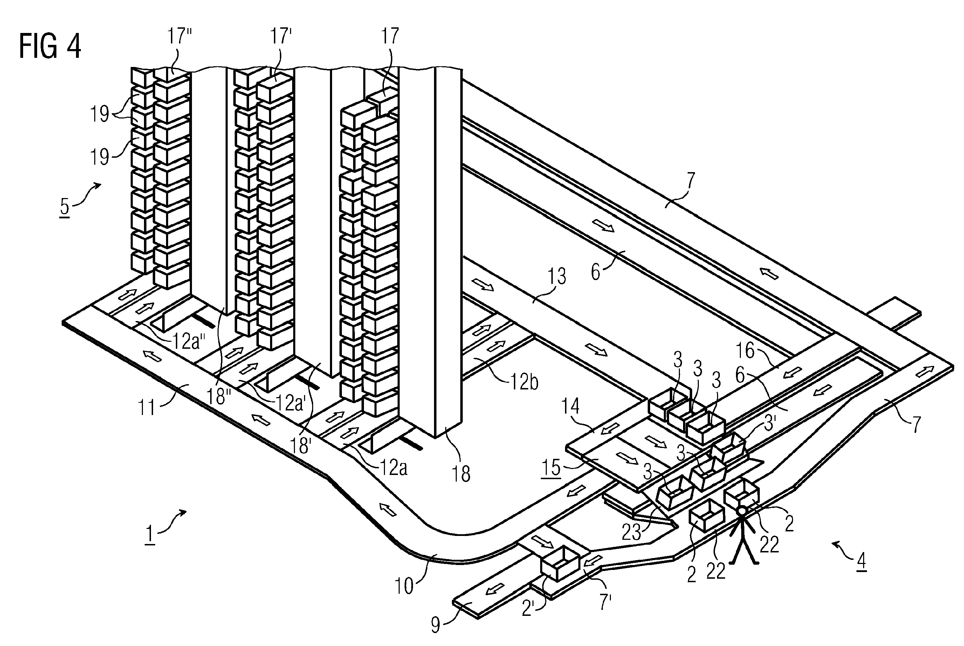

Die Figuren 3 und 4 zeigen eine Variante der erfindungsgemäßen Kommissionieranlage, die weitgehende Übereinstimmung mit der Variante der Figuren 1, 2 aufweist, sodass insoweit nicht mehr alle Details erläutert werden müssen. Im Unterschied zu der ersten Variante sind in Figur 3, 4 die drei Speicherturmmodule des Pufferspeichers 5 aus der Sicht des Kommissionierers nicht nebeneinander sondern hintereinander angeordnet. Die Abführeinrichtung 9 zur Weiterleitung befüllter Kundenbehälter 3 an den nicht dargestellten Versand zweigt im vorliegenden Fall in der Nähe des Kommissionierplatzes 4 von dem Förderer 10 ab. In gleicher Weise wie in Figur 1, 2 werden Artikelbehälter 2 auf einer unteren Förderebene mittels des Förderers 6 aus dem Artikellager herangeschafft und am Kommissionierplatz 4 in einer für den Kommissionierer bequem erreichbaren etwas erhöhten Lage auf den Entnahmeplätzen 22 abgestellt. Die Abförderung entleerter oder teilentleerter Artikelbehälter 2 bzw. 2' erfolgt in einer gegenüber dem Niveau der Entnahmeplätze 22 nochmals erhöhten Förderebene über die Förderer 7 bzw. 7'. Die Ein- und Ausschleusvorrichtung 15 weist wie im Fall der ersten Variante der Erfindung drei parallele Spuren auf, auf denen die Kundenbehälter zu den Beladeplätzen 23 geführt werden können. Die beiden linken Spuren sind in diesem Fall für die wiederholte Zuführung bereits teilbefüllter Kundenbehälter 3 aus dem Pufferspeicher 5 vorgesehen, während in der rechten Spur mehrere Kundenbehälter 3 hintereinander zur Benutzung bereitstehen. Der Durchlauf durch die Ein- und Ausschleusvorrichtung 15 erfolgt im Gegensatz zur ersten Variante nur in einer Richtung, und zwar von hinten nach vorn auf den Kommissionierer zu. Zum Abtransport teilbefüllter oder fertig kommissionierter Kundenbehälter 3 können die Beladeplätze 23 nach unten geschwenkt werden, wie dies für den äußersten rechten Beladeplatz 23 mit dem Kundenbehälter 3' exemplarisch dargestellt ist. Die Beladeplätze 23 können also wie ein Flip-Flop zwei verschiedene Betriebsstellungen einnehmen, nämlich eine Beladeposition und eine Abtransportposition. Die von dem Kommissionierplatz abzutransportierenden Kundenbehälter 3 werden somit unterhalb der Ebene der Ein- und Ausschleusvorrichtung 15 auf den Förderer 10 zurückgeführt und können so in den Pufferspeicher 5 gelangen. Die Zuführung von leeren Kundenbehältern erfolgt mittels des Förderers 16 von der rechten Seite zwischen den Ebenen der beiden Förderer 6, 7.

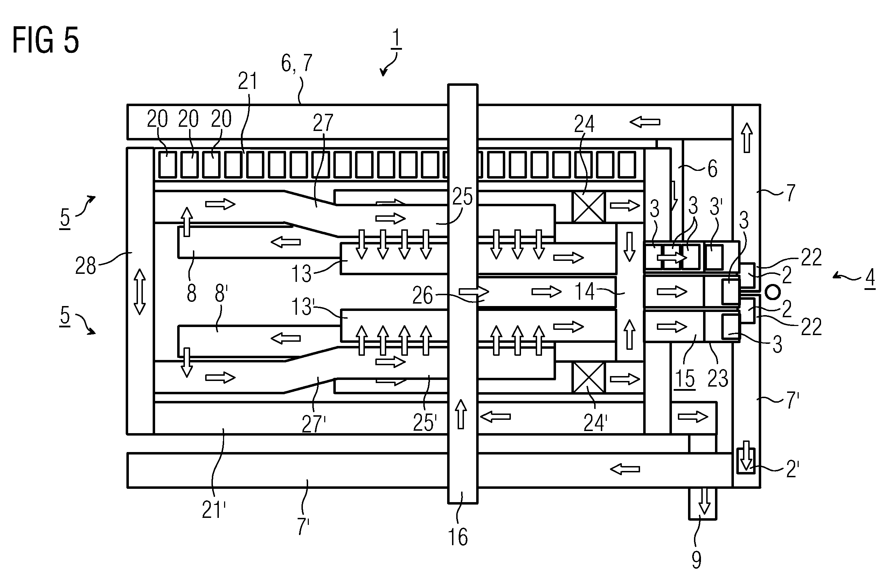

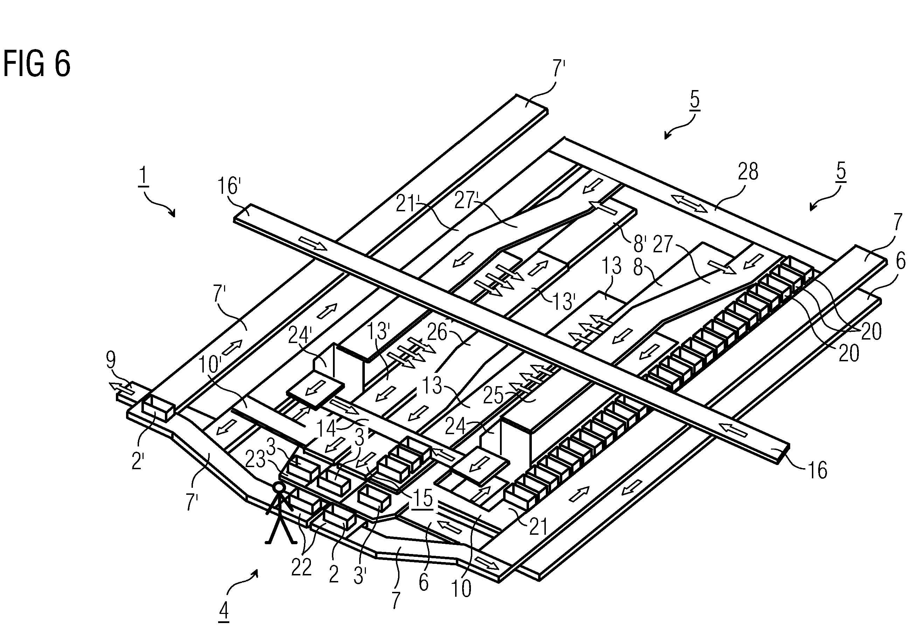

Die Figuren 5, 6 stellen eine weitere Variante der erfindungsgemäßen Kommissionieranlage 1 dar, die in Blickrichtung des Kommissionierers im Wesentlichen symmetrisch aufbaut ist und bei der der Kommissionierplatz 4 unmittelbar vergleichbar ausgeführt ist wie in der zweiten Variante gemäß Figur 3, 4. Der Pufferspeicher 5 ist hierbei jedoch nicht mit Speichertürmen ausgeführt, sondern er weist horizontal nebeneinander liegende Speicherplätze 20 auf, die in Weiterbildung der Erfindung jeweils auf einem Förderer, und zwar einem Stauförderer angeordnet sind. Zur Vergrößerung der Speicherkapazität und zur Schaffung einer Redundanz (größere Ausfallsicherheit) weist das dargestellte Ausführungsbeispiel zwei im Abstand symmetrisch einander gegenüberliegende Stauförderer 21, 21' auf, in denen aktuell nicht vom Kommissionierer benötigte Kundenbehälter 3 auf Speicherplätzen 20 zeitweilig abgestellt werden können. Die Stauförderer 21, 21' sind reine sequentielle Speicher, gestatten also keinen wahlfreien Zugriff auf die einzelnen Speicherplätze 20. Ein teilbefüllter Kundenbehälter 3', kann von einem Beladeplatz 23 über den Förderer 10 bzw. 10' zum Stauförderer 21 bzw. 21' transportiert werden. Da nur ein sequentieller Zugriff auf die Speicherplätze 20 dieses Stauförderers 21, 21' möglich ist, werden von der Steuerung der Kommissionieranlage 1 nur solche Kundenbehälter 3 dort hin geschickt, bei denen aufgrund der angeforderten Artikel im jeweils zugeordneten Kommissionierauftrag und der geplanten Reihenfolge der Abarbeitung der unterschiedlichen Artikelbehälter von vornherein klar ist, dass sie für längere Zeit nicht wieder zum Kommissionierplatz 4 zurückgeführt werden müssen. Dies ist beispielsweise der Fall, wenn zahlreiche Filialen eines Filialunternehmens täglich mit im Wesentlichen gleichen Artikeln versorgt werden müssen. In diesem Fall gibt es immer eine Reihe von Kundenbehältern, die dem entsprechend mit den gleichen Artikeln bestückt werden, so dass die Reihenfolge untereinander auch bei der weiteren Bestückung mit wiederum untereinander gleichen Artikeln eigentlich keine Rolle spielt. Handelt es sich dagegen um Kundenbehälter 3, die in der Folge der weiteren abzuarbeitenden Artikelbehälter 2 deutlich schneller wieder benötigt werden, dann werden diese in einen separaten Bereich des Pufferspeichers 5 eingestellt, der ebenfalls als Stauförderer 25 ausgebildet ist und dem die abzustellenden Kundenbehälter 3 ebenfalls nur von einer Seite her zugeführt werden können, bei dem allerdings eine wahlfreie Entnahme der Kundenbehälter 3 möglich ist. Dies wird beispielsweise dadurch realisiert, dass jeder einzelne Abstellplatz auf dem Stauförderer 25 mit einem Pusher (in Figur 6 durch Pfeile angedeutet) versehen ist. Dadurch können gezielt einzelne Kundenbehälter 3 von dem Stauförderer 25 auf den Förderer 13, 13' geschoben werden, um über den weiteren Förderer 14 zur Ein- und Ausschleusvorrichtung 15 am Kommissionierplatz 4 zu gelangen. Ein Kundenbehälter 3, der von einem Beladeplatz 23 auf den Stauförderer 25 verschoben werden soll, wird über den Förderer 10 und einen davon abzweigenden Förderer 8 abgefördert und gelangt nach einer Umsetzung auf einen Förderer 27, der mit einer Steigungsstrecke versehen ist, zu dem auf einem höheren Niveau befindlichen Stauförderer 25. In entsprechender Weise wird ein zum Ausgang des Stauförderers 21 gelangender Kundenbehälter 3 über einen Förderer 28 an die Steigungsstrecke des Förderers 27 gegeben, um in Richtung des Kommissionierplatzes 4 weiterbefördert werden zu können. Bei Kundenbehältern 3, die nur für sehr kurze Zeit den Beladeplatz 23 für einen anderen Kundenbehälter 3 räumen müssen und nach diesem unmittelbar wieder benötigt werden, sieht diese Variante der Erfindung zwei Vertikalförderer 24, 24' vor, die eine äußerst schnelle Rückführung eines abtransportierten Kundenbehälters 3 gestatten. Hierzu gelangt ein solcher Kundenbehälter 3 über den Förderer 10 auf ein unteres Niveau des Vertikalförderers 24 und wird von diesem hochgefördert, bis er entsprechend den eingetragenen Pfeilen in Figur 6 eine Höhenposition erreicht hat, dass er an den Förderer 13 abgegeben werden kann. Leere Kundenbehälter 3 können der Kommissionieranlage 1 über die Förderer 16, 16' und den im mittleren Bereich angeordneten Förderer 26 zugeführt werden. Da die Ein- und Ausschleusvorrichtung 15 von den Kundenbehältern 3 nur in einer Durchlaufrichtung passiert werden kann, ist es im Unterschied zu dem in den Figuren 1 und 2 dargestellten Kommissionierplatz möglich, mehrere Kundenbehälter hintereinander in einer Spur für jeden Beladeplatz 23 aufzustellen.

## Patentansprüche

1. Verfahren zur Kommissionierung in einer Kommissionieranlage (1)
- mit fördertechnischen Anschlüssen (9; 6) an einen Versandbereich und an ein Artikellager, in dem unterschiedliche Artikel jeweils in Artikelbehältern (2) gelagert sind,
- mit mindestens einem Kommissionierplatz (4), zu dem Artikelbehälter (2) zwecks auftragsspezifischer Entnahme von Artikeln mittels erster Fördereinrichtungen (6 - 7) hin und wieder zurück transportiert werden, wobei die Artikelbehälter (2) dem Kommissionierplatz (4) jeweils in einer zur Kommissionierung der Aufträge vorgegebenen Reihenfolge zugeführt werden, ferner
- mit mindestens einem Pufferspeicher (5) im Nahbereich des Kommissionierplatzes (4) für Kundenbehälter (3), in denen die entnommenen Artikel auftragsspezifisch abgelegt werden, wobei der Pufferspeicher (5) über zweite Fördereinrichtungen (10 - 15) einerseits mit dem Versandbereich und andererseits mit dem Kommissionierplatz (4) verbunden ist, und
- mit einer Zuführeinrichtung (16) zum Kommissionierplatz für leere Kundenbehälter (3) und
- mit einer Abführeinrichtung (9) für fertig kommissionierte Kundenbehälter (3),
**dadurch gekennzeichnet,**
**dass** zwecks Gewährleistung einer unterbrechungsfreien Kommissioniertätigkeit am mindestens einen Kommissionierplatz (4) die Artikelbehälter (2) und die Kundenbehälter (3) dem jeweiligen Kommissionierplatz (4) zeitlich so gesteuert zugeführt und von diesem wieder abgeführt werden, dass zumindest während längerer Betriebsphasen, insbesondere während der gesamten Betriebszeit, fortlaufend mindestens ein zu befüllender Kundenbehälter (3) und mindestens ein Artikelbehälter (2), der zumindest einen für den dem mindestens einen Kundenbehälter (3) jeweils zugeordneten Auftrag noch benötigten Artikel enthält, am Kommissionierplatz (4) jeweils in Arbeitsposition bereitstehen.

2. Verfahren nach Anspruch 1,
**dadurch gekennzeichnet,**
**dass** während des regulären Betriebs des Kommissionierplatzes (4) regelmäßig mindestens zwei Artikelbehälter (2) und mindestens zwei, insbesondere mindestens drei Kundenbehälter (3) zur Kommissionierung am Kommissionierplatz (4) in Arbeitsposition bereitstehen.

3. Verfahren nach einem der Ansprüche 1 - 2,
**dadurch gekennzeichnet,**
**dass** die Artikel in einer vorab bestimmten Sequenz aus dem Artikellager ausgelagert und dem Kommissionierplatz (4) zugeführt werden.

4. Verfahren nach Anspruch 3,
**dadurch gekennzeichnet,**
**dass** während der Kommissionierung im Wesentlichen sämtliche Kundenbehälter (3) für eine vorgegebene Serie von Aufträgen zeitlich parallel am Kommissionierplatz (4) oder im Pufferspeicher (5) zur Verfügung stehen und die Artikel eines Artikelbehälters (2) - soweit dessen Stückzahl ausreicht - während eines ununterbrochenen Aufenthalts des Artikelbehälters (2) am Kommissionierplatz (4) jeweils auf alle diejenigen Kundenbehälter (3) verteilt werden, die diesen Artikel benötigen, wobei die betroffenen Kundenbehälter (3) zeitgerecht zwischen dem Pufferlager (5) und dem Kommissionierplatz (4) hin und her transportiert werden, und dass der jeweilige Artikelbehälter (2) nach Entnahme der benötigten Stückzahl des Artikels bei Vorhandensein eines Restbestandes im Artikelbehälter (2) in das Artikellager zurückgelagert wird.

5. Verfahren nach einem der Ansprüche 1 - 4,
**dadurch gekennzeichnet,**
**dass** die Artikelbehälter (2) einerseits und die Kundenbehälter (3) andererseits am Kommissionierplatz (4) auf unterschiedlichen Ebenen bereitgestellt werden.

6. Verfahren nach einem der Ansprüche 1 - 5,
**dadurch gekennzeichnet,**
**dass** die Zu- und /oder Abführung der Artikelbehälter (2) und Kundenbehälter (3) mittels fest installierter Förderer (6 - 16) erfolgt.

7. Verfahren nach einem der Ansprüche 1 - 6,
**dadurch gekennzeichnet,**
**dass** die Kundenbehälter (3) im Pufferspeicher (5) auf unterschiedlichen Ebenen zwischengespeichert werden.

8. Kommissionieranlage, insbesondere zur Durchführung des Verfahrens nach Anspruch 1,
- mit einer elektronischen Steuerung,
- mit einem fördertechnischen Anschluss (6) an ein Artikellager, in dem unterschiedliche Artikel in Artikelbehältern (2) lagerbar sind,
- mit mindestens einem Kommissionierplatz (4), zu dem Artikelbehälter (2) zwecks auftragsspezifischer Entnahme von Artikeln mittels erster Fördereinrichtungen (6 - 7) hin und wieder zurück transportierbar sind,
- mit mindestens einem Pufferspeicher (5) für Kundenbehälter (3) im Nahbereich des Kommissionierplatzes (4), wobei der Pufferspeicher (5) über zweite Fördereinrichtungen (10 - 15) mit dem Kommissionierplatz (4) verbunden ist und bei der Auslagerung einen wahlfreien Zugriff auf zumindest einen Teil der in ihm zwischengespeicherten Kundenbehälter (3), insbesondere auf alle gespeicherten Kundenbehälter (3), erlaubt, ferner
- mit einer Zuführeinrichtung (16) für leere Kundenbehälter (3) zum Kommissionierplatz (4), in denen die zu einem Auftrag gehörigen Artikel aufnehmbar sind, und
- mit einer Abführeinrichtung (9) vom Kommissionierplatz (4) für fertig kommissionierte Kundenbehälter (3),
**dadurch gekennzeichnet,**
**dass** der Kommissionierplatz (4) über mindestens zwei Entnahmeplätze (22), an denen jeweils ein Artikelbehälter (2) in Arbeitsposition bereitstellbar ist, und über mindestens zwei, insbesondere mindestens drei Beladeplätze (23) verfügt, an denen Kundenbehälter (23) in Arbeitsposition bereitstellbar sind.

9. Kommissionieranlage nach einem der Anspruch 8,
**dadurch gekennzeichnet,**
**dass** die Entnahmeplätze (22) und die Beladeplätze (23) jeweils unabhängig voneinander mit Artikelbehältern (2) bzw. Kundenbehältern (3) beladbar und entladbar sind.

10. Kommissionieranlage nach einem der Ansprüche 8 - 9,
**dadurch gekennzeichnet,**
**dass** die elektronische Steuerung darauf eingerichtet ist, dass die Artikelbehälter (2) und die Kundenbehälter (3) dem Kommissionierplatz (4) zeitlich so gesteuert zuführbar und von diesem wieder abführbar sind, dass zumindest während längerer Betriebsphasen fortlaufend an den Beladeplätzen (23) mindestens ein noch zu befüllender Kundenbehälter (3) und an den Entnahmeplätzen (22) mindestens ein Artikelbehälter (2), der zumindest einen für den jeweiligen Auftrag des mindestens einen zu befüllenden Kundenbehälters (3) noch benötigten Artikel enthält, bereitstehen.

11. Kommissionieranlage nach einem der Ansprüche 8 - 10,
**dadurch gekennzeichnet,**
**dass** eine Mehrzahl von Kommissionierplätzen (4) vorgesehen ist.

12. Kommissionieranlage nach einem der Ansprüche 8 - 11,
**dadurch gekennzeichnet,**
**dass** die Kommissionierplätze (4) über ein fördertechnisches Verteilsystem, insbesondere ein kontinuierlich umlaufenden Förderer mit dem Artikellager verbunden sind.

13. Kommissionieranlage nach einem der Ansprüche 8 - 12,
**dadurch gekennzeichnet,**
**dass** der Pufferspeicher (5) jeweils als mindestens ein Speicherturm (17) mit einem Vertikalförderer (18) und mehreren übereinander angeordneten Speicherplätzen (19) ausgebildet ist.

14. Kommissionieranlage nach Anspruch 13,
**dadurch gekennzeichnet,**
**dass** der Pufferspeicher (5) jeweils mindestens zwei, insbesondere mindestens drei Speichertürme (17) umfasst, die hinsichtlich der Zu- und Abförderung der Kundenbehälter (3) an eine gemeinsame Förderanlage (10 - 14) angeschlossen sind.

15. Kommissionieranlage nach einem der Ansprüche 8 - 12,
**dadurch gekennzeichnet,**
**dass** der Pufferspeicher (5) horizontal nebeneinander angeordnete Speicherplätze (20), insbesondere als Teil eines Förderers (21) ausgebildete Speicherplätze (20) aufweist.
